# EUROPEAN PATENT APPLICATION

(11) **EP 1 340 999 A1**
(43) Date of publication of application: **03.09.2003**
(21) Application number: 02251400.4
(22) Date of filing: 28.02.2002
(51) Int. Cl.: G01S 5/16, G01S 7/40

(54) **Method and apparatus for identifying the position of an object**

(71) Applicant: Alignment International Limited, Sheffield S10 2HW (GB)
(72) Inventor: Bassnett, Barry Raymond, Barnsley S71 5EW (GB)
(74) Representative: Atkinson, Ralph

(57) **Abstract**

The position of an object is identified by precisely fixing a bracket of a predetermined size to the object. The bracket has a plurality of substantially point-sized light sources or reflectors affixed thereto in a predetermined arrangement. The position of the light sources is sensed in two-dimensions relative to the optical axis of a sensing device. The position data received from the sensing device is processed to identify relative positions of the light sources. The position of the object is identified by referring to the predetermined arrangement of the light sources.

## Description

The present invention relates to an apparatus for identifying the position of an object and a method of identifying the position of an object.

Most aircraft and sea-going vessels carry radar or sonar equipment in order to analyse their surroundings. Many aircraft carry weather radar to detect storms and ground radar to give altitude readings, and more specialised avionics are also used. Boats use sonar to detect the sea floor and submarines are entirely dependent upon it for navigation.

Aircraft and marine instrumentation is usually made up of a number of different components, and each of the components needs to be aligned with each of the others such that they are all pointing in the same direction. This usually needs to be carried out within a very small tolerance, since a small misalignment can give a disproportionately inaccurate reading, especially if the object being detected is some distance away.

,Current systems for measuring the alignment of radar components depend upon the type of aircraft or vessel carrying the equipment, but most involve extremely accurately machined interface units that cost a large amount of money and often take a long time to set up. The actual alignment check can also take a considerable amount of time.

In addition, the present systems rely heavily on the accuracy of the alignment equipment but have no method for discovering whether that accuracy has been compromised, for instance by the equipment being dropped. They are also are sensitive to changes in the aeroplane, such as occur if a person sits in the cockpit.

Photogrammetric techniques have long been used for measuring the topography of objects which resist measurement in other ways. Digital cameras are often used, but if two cameras are used it is necessary to perform a tedious amount of calibration on every use. Using only one camera enables the user to simply place the camera and start measuring, but the lack of stereo imaging means that there is a limited depth accuracy, usually less than is acceptable. For this reason photogrammetry has not been used for alignment techniques.

According to an aspect of the present invention, there is provided an apparatus for identifying the position of an object, comprising a bracket of predetermined size which is configured to be precisely fixed to an object, wherein said bracket has a plurality of point-sized light sources or reflectors affixed to thereto in a predetermined arrangement; one or more opto-electronic sensing means configured to sense the positions of said light sources or reflectors in two-dimensions relative to the optical axes of said sensing means; and data processing means configured to receive said relative positions of said light sources or reflectors from said sensing means, and to identify the position of said object by referring to the predetermined arrangement of said light sources or reflectors.

In a preferred embodiment, the bracket comprises fixing means, connecting means and a light pad and the fixing means may be attached to the object.

The invention will now be described by way of example only, with reference to the accompanying drawings, of which:
*Figure 1* shows a search and rescue aircraft;
*Figure 2* shows the avionic components carried by the aircraft shown in *Figure 1*;
*Figure 3* illustrates the three axes of rotation of an object;
*Figure 4* illustrates a radar component shown in *Figure 2*;
*Figure 5* illustrates a bracket which fits onto the tray shown in *Figure 4*;
*Figure 6* illustrates a light pad as shown in *Figure 5*;
*Figure 7* shows an alignment system;
*Figure 8* illustrates the system shown in *Figure* 7 in use;
Figure 9 details the controlling processor shown in *Figure 7*;
*Figure 10* details a light pad interface processor shown in *Figure 7*;
*Figure 11* illustrates the camera shown in *Figure 7*;
*Figure 12* illustrates the principle of use of the camera shown in *Figure 11*;
*Figure 13* shows a statistical analysis of light intensity;
*Figure 14* illustrates the calibration of the camera shown in *Figure 11*;
*Figure 14A* illustrates the effect of the calibration as shown in *Figure 14*;
*Figure 15* shows a light pad and a camera in use;
*Figure 15A* illustrates the effect of the light pad on the camera as shown in *Figure 15*;
*Figure 16* shows the twenty-one measurements that can be made in one dimension between the LEDs on the light pad;
*Figure 17* illustrates the program run by the controlling processor shown in *Figure 9*;
*Figure 18* details steps carried out in *Figure 17* to set up the equipment;
*Figure 19* details steps carried out in *Figure 18* at which instructions to set up the camera are displayed;
*Figure 20* illustrates an instruction screen as referred to in *Figure 19*;
*Figure 21* details steps carried out in *Figure 18* to set up and test the brackets;
*Figure 22* illustrates an instruction screen as referred to in *Figure 21*;
*Figure 23* illustrates the follow up instruction screen to that illustrated in *Figure 22*;
*Figure 24* details steps carried out in *Figure 17* to check alignment of a component;
*Figure 25* details steps carried out in *Figure 24* to activate a light pad and analyse input;
*Figure 26* details steps carried out in *Figure 25* to analyse input;
*Figure 27* illustrates the obtaining of accurate co-ordinates as carried out in *Figure 26*;
*Figure 28* details matrices used to obtain relative rotations of components;
*Figure 29* details steps carried out in *Figure 17* to align the trays;
*Figure 30* illustrates a display screen referred to in *Figure 29*;
*Figure 31* details steps carried out in *Figure 29* to align a tray with a reference tray; and
*Figure 32* illustrates a display screen referred to in *Figure 31.*

The invention is a method of discovering the relative orientation of objects. It will be illustrated with respect to radar equipment but may also be used for other applications, for instance checking the angles of the walls in a room.

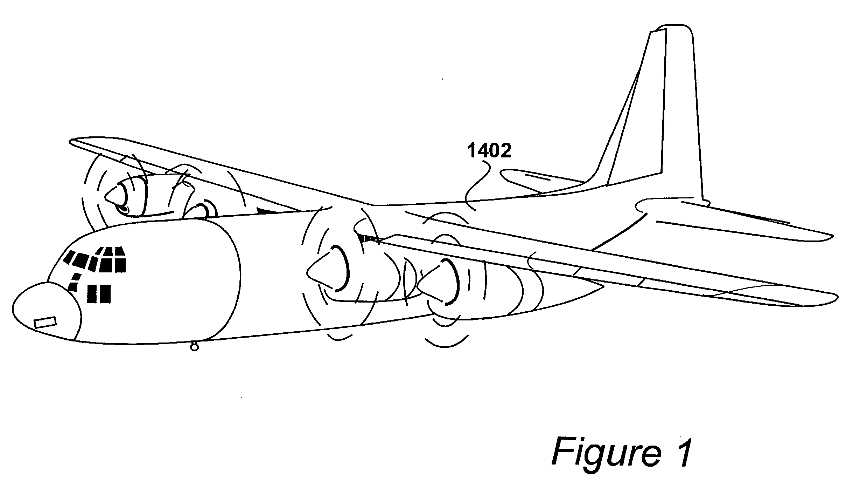

*Figure 1* shows an aircraft **101.** In the present embodiment aircraft **101** is designed for search and rescue missions. Such an aircraft may, when not on more urgent business, also perform tasks such as terrain mapping, and the radar is continually necessary to sense weather systems and other aircraft. These secondary duties do not necessitate a particularly accurate system, but the location of individual objects from a height requires precise readings. Hence it is necessary that the components should be aligned within very small tolerances.

Many incidents may occur which change the alignment of the components. Bad weather, maintenance practices, a bumpy landing or high speed manoeuvres can all subtly alter the shape of the aircraft, and so it is necessary that the alignment of the components be checked at regular intervals and realigned if necessary.

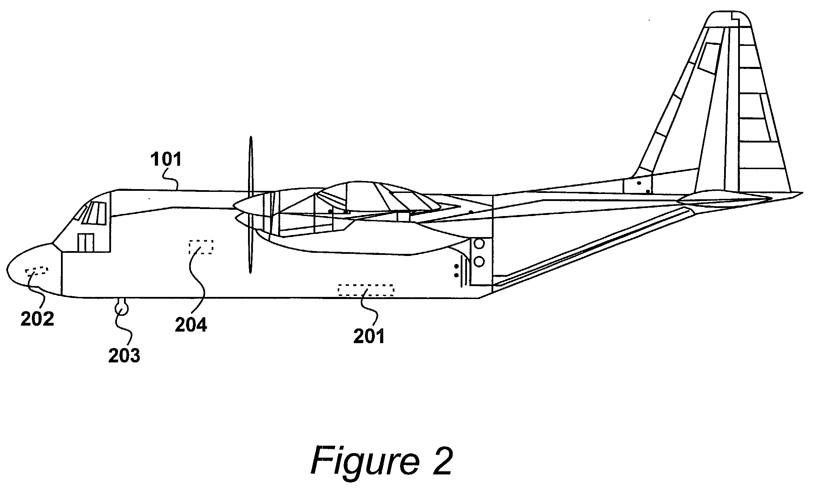

*Figure 2* shows the radar components carried by aircraft **101.** Component **201** is a plate which is used as a reference point for the aircraft (ARP). Component **202,** a forward looking infrared (FLIR) searches in front of the aircraft using infrared while 360° antenna **203** searches all around the aircraft using conventional radar. Component **204** is an inertial navigation system (INS), which continually calculates the attitude of the aircraft and which may also include a global positioning system that uses satellites to plot the aeroplane's geographical position.

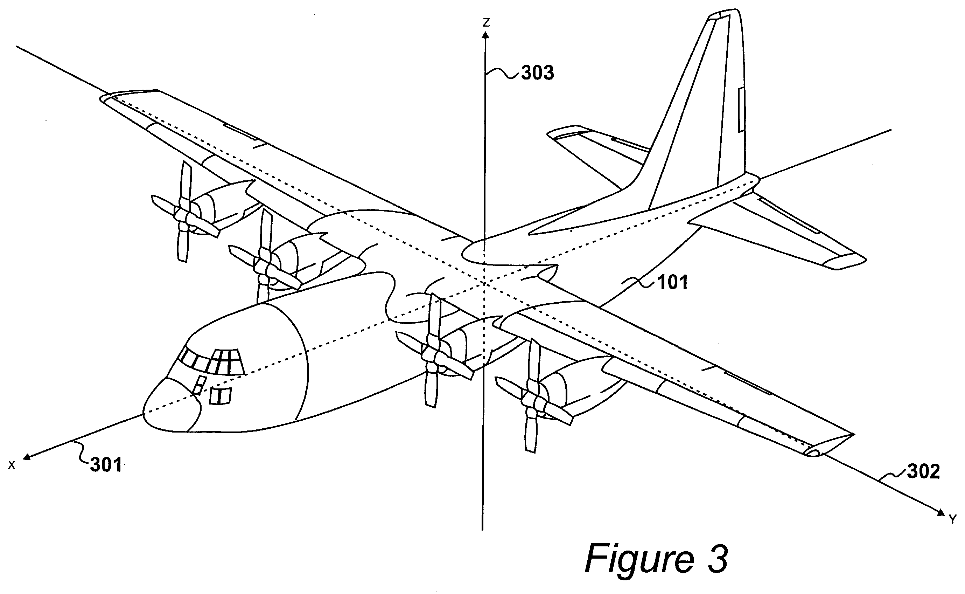

Components **201** to **204** do not need to be at an exact distance from one another, but they must be aligned with one another with respect to their attitude. Any shift of a component from a completely level attitude may be described in terms of rotation about the three axes shown in *Figure 3.* Rotation about the x-axis **301** is called roll, rotation around the y-axis **302** is called pitch and rotation about the z-axis **303** is called yaw. Typically, the respective angles of rotation of the components should not differ by more than three milliradians. Certain components may be at an angle to others, for instance in this embodiment the FLIR is rolled forward by a certain angle in order to scan the ground ahead of the track, but this angle must be exact with respect to the other components.

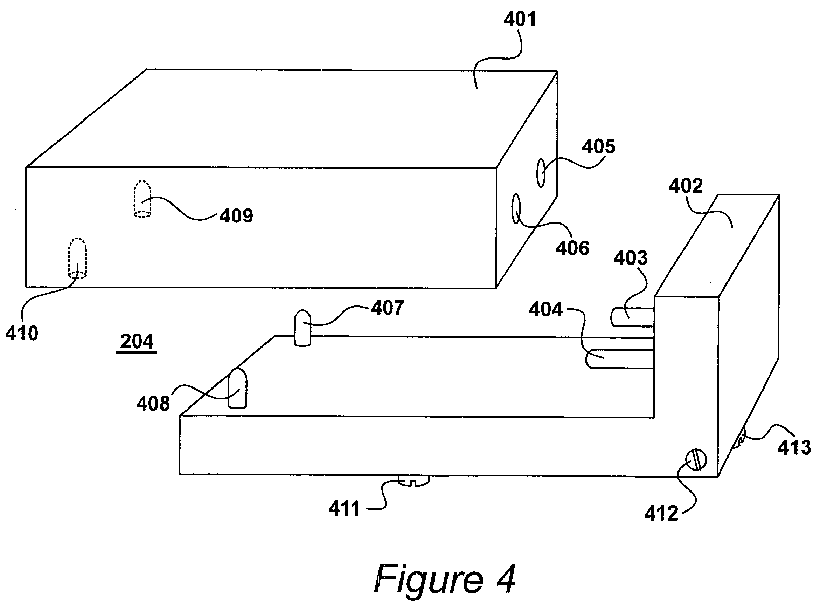

*Figure 4* shows a typical radar component, INS **204.** It consists of a case **401** and the delicate machinery housed within. Case **401** is attached to the aircraft by tray **402**. Tray **402** and the surface areas of case **401** which contact tray **402** are precisely machined such that they fit together exactly. Contact is made between case **401** and tray **402** via horizontal pins **403** and **404** in the tray which fit respectively into holes **405** and **406** in the case, and via vertical pins **407** and **408** which fit respectively into holes **409** and **410**. By means of this arrangement, the case may be both securely and precisely attached to the tray. Depending on the component and the aircraft other methods of attachment may be used, but each adheres to the same principles.

Tray **402** may be attached to the aircraft by a number of means, for instance by screws or shims such as **411**, **412** and **413**. These may be adjusted to change the angle of rotation of the tray, and hence of the case. Given that the view of the INS shown in *Figure 4* is that seen through the left side of the aircraft, screw **411** adjusts the roll of the component, screw **412** adjusts the yaw and screw **413** adjusts the pitch.

Hence, it is clear that since the components are machined to fit precisely with the trays, in order to ensure that the components are aligned with one another it is sufficient to ensure that their respective trays are aligned. Prior art methods of achieving this rely on machined brackets which fit to the trays and mirror their internal positions on the outside of the aircraft, an attached electro-optical alignment device, such as a laser, being used to obtain the alignment of the trays. The laser may be pointed at a target or at a laser receptor.

These systems, however, are costly because the brackets must be precisely machined to mimic the trays. In addition, the systems take a considerable amount of time to set up, typically an hour or more, before the actual alignment can be checked.

Furthermore, these systems rely on the brackets and the target or receptor not moving during the alignment operation. Unfortunately, the very act of aligning them often requires a technician to move around the aircraft which alters the shape slightly. Given the required degree of precision, this is often enough to knock the lasers off target and the procedure must be restarted.

An additional, and crucial, problem with the current systems is that if a bracket or laser is damaged there is often no way of discovering this unless the damage is such that it is perceptible to the human eye. Given the necessary accuracy, this is usually not a sufficient test.

The present invention offers a system that is considerably cheaper and quicker to set up than the current systems, is resistant to movement of the aeroplane since it compares components with each other rather than with an external object, and offers a self checking mechanism in case of damage. It comprises a set of brackets, one of which fits onto each tray on the aircraft, that include an arrangement of light emitting diodes (LEDs). The pattern that these LEDs produce is different depending on the angle of the bracket, and hence of the tray, and this pattern may be analysed by a processor via a CCTV camera.

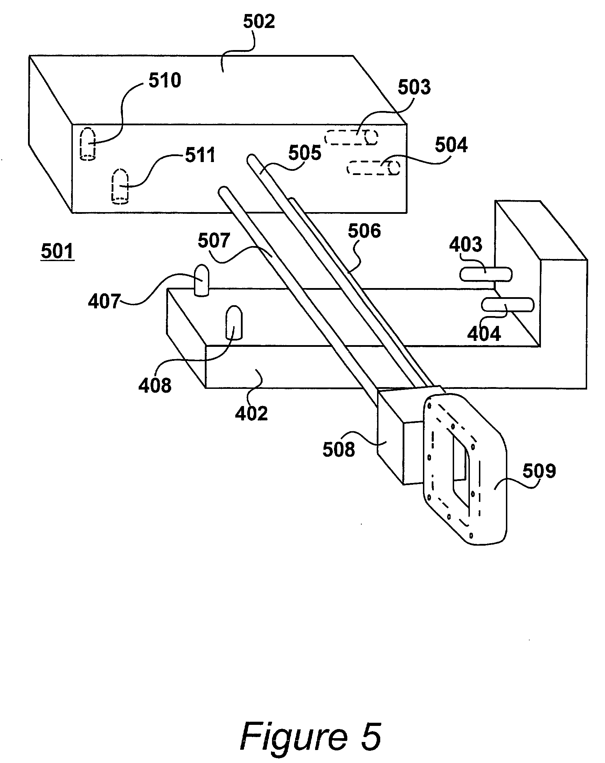

*Figure 5* illustrates a bracket **501** which fits onto tray **402.** Bracket **501** comprises a case **502,** three rods **505, 506** and **507,** an interface **508** and a light pad **509** carrying the LEDs. Case **502** fits onto tray **402** by means of the same attachment system as case **401**, namely that pins **403, 404, 407** and **408** fit respectively into holes **503, 504, 510** and **511**. Case **502** must be accurately made in that holes **503** and **504** must be positioned correctly, but its surface need not be flush with the surface of the tray, as is necessary for case **401** and the previous alignment systems. All that is necessary is that it can be positioned repeatedly without error, which is obtained by the accurate placement of holes **503, 504, 510** and **511.** Attached to case **502** are three rods **505, 506** and **507** arranged in a triangular pattern for maximum strength. Rods **505** to **507** are made from titanium, but may be made from any other durable material which is both inflexible and strong.

Attached to the other end of rods **505** to **507** and parallel to the surface of case **502** is an interface **508**, constructed such that light pad **509** may be easily attached thereto, which powers and controls the LEDs. Light pad **509** is the most likely part of bracket **501** to be damaged, and hence this system provides for easy replacement of a non-functional light pad. Light pad **509** attaches to interface **508** such that the top and bottom surfaces of it are at an angle of approximately 20° to the horizontal surface of tray **402**, thus ensuring that the LEDs may be 'seen' by a CCTV camera on the ground.

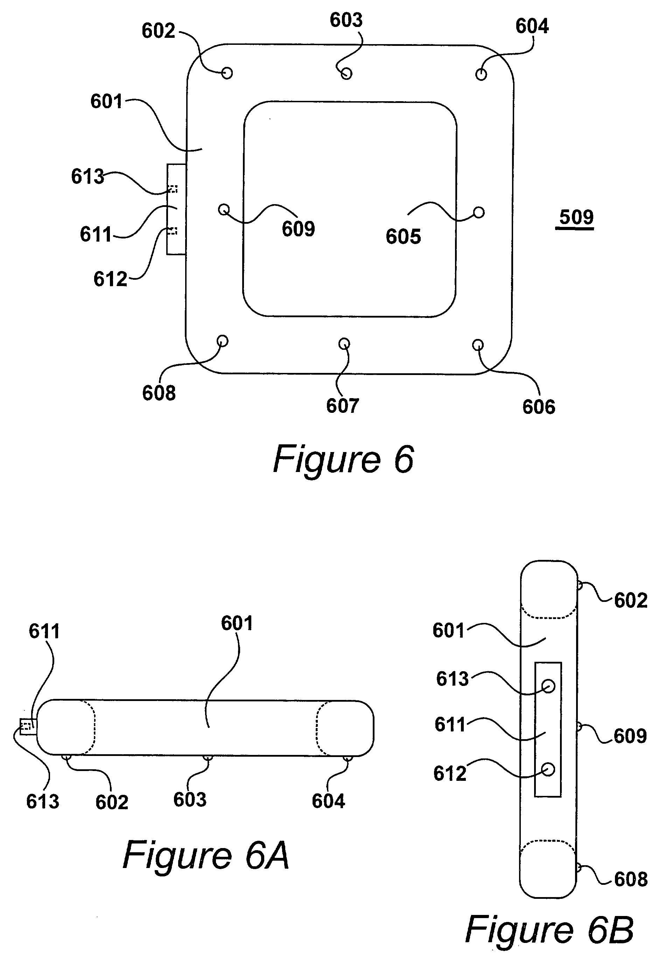

Light pad **509** is shown in elevation in *Figure 6,* in plan view in *Figure 6A* and from the side in *Figure 6B.* It is constructed from carbon fibre or another light but durable material and comprises a body **601** with eight light emitting diodes (LEDs) **602, 603, 604, 605, 606, 607, 608** and **609** arranged in a square on the front face. This particular design is used because the tubular structure is extremely strong, but it will be appreciated that many other shapes and arrangements of LEDs are possible provided that the LEDs are in at least two dimensions.

Light pad **509** additionally includes an attaching plate **611** containing holes **612** and **613** by which it may be attached to interface **508**. Wires pass from interface **508** through attaching plate **611** to each of the LEDs to provide power and to control them. It will be understood that any method of attaching the light pad to the interface that provides stability and passage for wires may be used.

Bracket **501** is made such that when it is attached to the tray rods **505** to **507** are long enough to protrude out of the aircraft via inspection hatches, such that the LEDs are visible to a camera facing down the aircraft from the nose. This camera is then used to sense the positions of the LEDs and thereby the angles of rotation of the tray relative to other trays may be calculated.

In an alternative embodiment (not shown) the LEDs may be replaced by reflectors and a light placed near the camera, by fibre optics or by any other point-sized sources of light.

Previous photogrammetric systems have used hand-held light pens that measure points on an object, whereas the invention uses a bracket that fixes to the object to be measured. This means that when adjustments are made the bracket moves with the tray, allowing remeasuring to take place very easily. In previous systems a light pen would have to be moved over the object again. Other systems use arrangements of LEDs on a jig that may be moved around an object, but these are sensitive to accidental movement of the jig. In the present invention the bracket is securely fixed and cannot be accidentally moved. Hence this bracket may be used with traditional two-camera photogrammetric systems to confer significant advantages as well as with the present system.

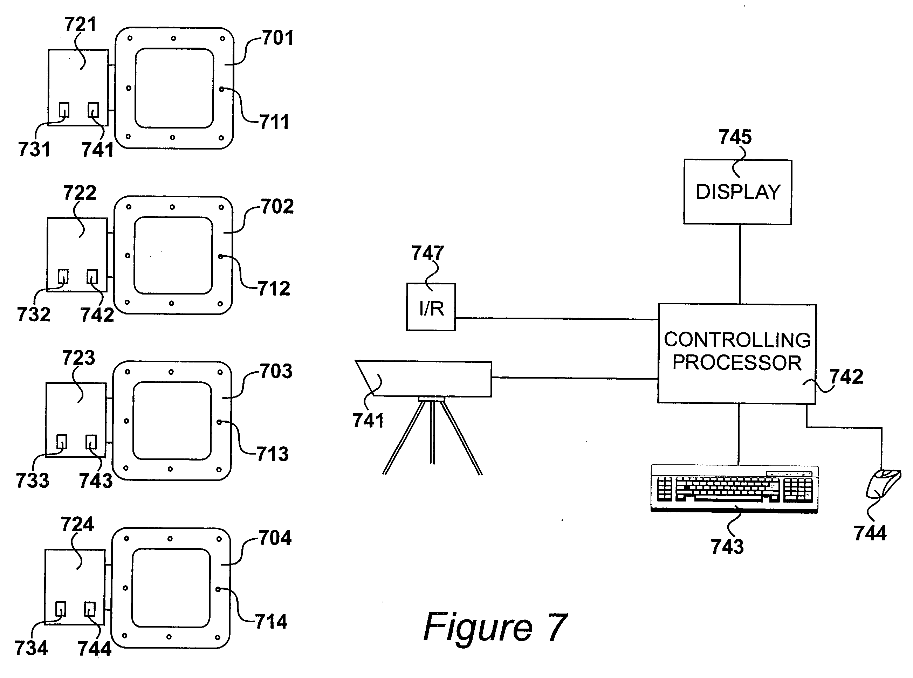

The complete system is shown in *Figure 7.* Four light pads **701, 702, 703** and **704** are attached to four interfaces **721, 722, 723** and **724** respectively. These interfaces belong to brackets attached to the trays for components **201** to **204** respectively. (Depending upon the type of aircraft, the number of light pads will vary with the number of radar components, but clearly there must always be at least two as there must be at least two components to align.) Light pads **701** to **704** include respectively LED arrangements **711, 712, 713** and **714**. Interfaces **721** to **724** include processors **731, 732, 733** and **734** and batteries **741, 742, 743** and **744** respectively. CCTV camera **741** and is connected to a controlling processor **742**. Processor **742** receives input commands from keyboard **743** and mouse **744** and outputs information via display **745**. In addition, processor **742** controls infrared transmitter **747**, which is used to transmit signals to light pads **701** to **704** and is incorporated within camera **741.**

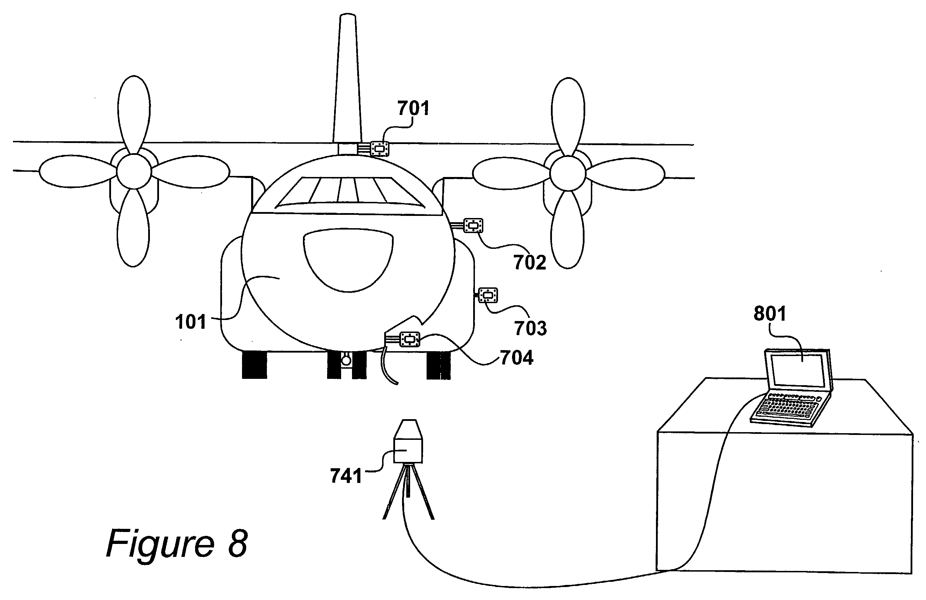

The system is shown in use in *Figure 8.* Light pads **701** to **704** are attached via brackets to their respective trays in aircraft **101.** Camera **741,** with infrared transmitter **747** incorporated, is placed in a position at the front of the aircraft such that LED arrangements **711** to **714** are in the line of sight. In this embodiment, processor **742**, keyboard **743**, mouse **744** and display **745** are comprised in a laptop computer **801**.

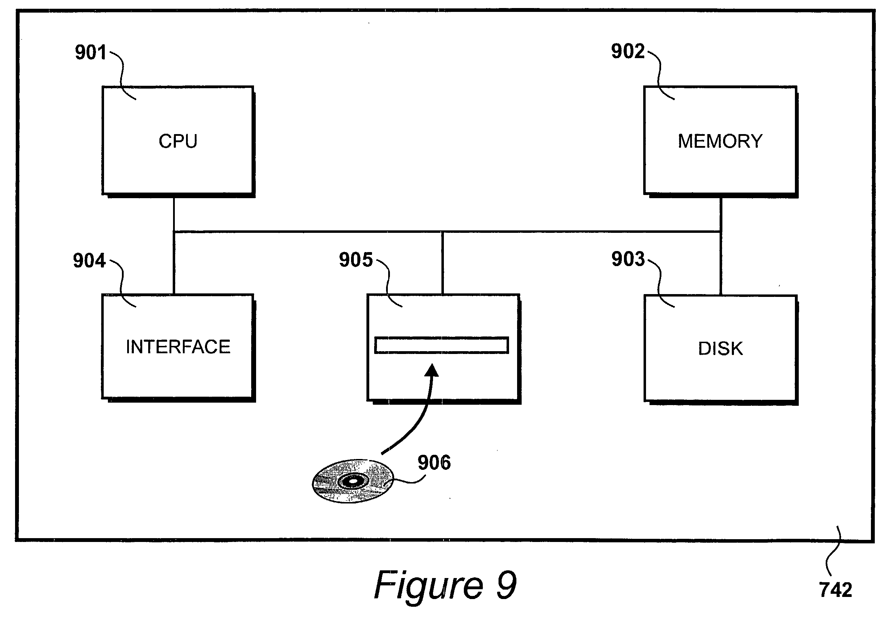

Controlling processor **742** is detailed in *Figure 9.* The system includes a central processing unit **901** such as a Pentium III Processor™ configured to operate under instructions received from system memory **902**. Programs are loaded into memory from disk storage **903** and communication to external devices is achieved by an input/output interface **904.** New program instructions are loaded to disk **903** via a reader **905** configured to receive an CD-ROM **906** or a similar data-conveying medium.

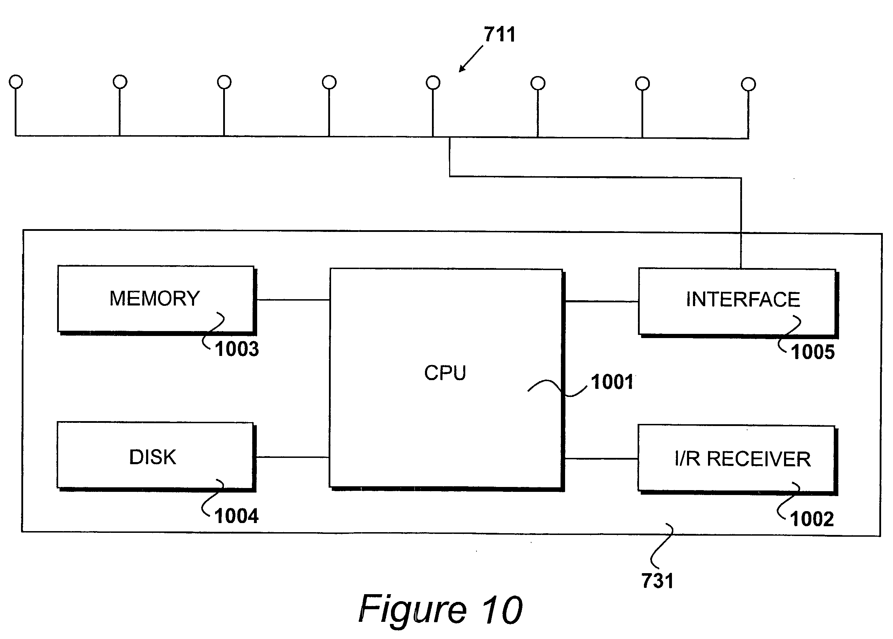

Processor **731** contained within interface **721** is detailed in *Figure 10*; processors **732** to **734** are identical. The system includes a small CPU **1001,** an infrared receiver **1002** placed at the front of the interface, memory **1003** and a disk **1004**. In addition, CPU **1001** controls LED arrangement **711** via output interface **1005**. Each light pad is assigned two unique infrared signals, the details of which are stored on disk **1004**, and so on receipt of a signal CPU **1001** will attempt to match it with either of the signals assigned to light pad **701**. If successful, it will either switch on or switch off the LEDs in arrangement **721**, depending on the signal received. Both processor **731** and LED arrangement **711** are powered by battery **741**, which may be changed by a user when necessary.

Hence, controlling processor **742** may, via infrared transmitter **747**, cause any or all of LED arrangements **711** to **714** to flash. These LED flashes are "seen" by the camera **741** and analysed by controlling processor **742**.

In alternative embodiments (not shown) each of interfaces **721** to **724** may be connected by cable to processor **742**, by which processor **742** may provide power to the processors and LEDs and send signals to switch the LEDs on or off. Alternatively, power to each interface may be provided by cable from an external power source or from the aircraft itself. Instructions may be sent to the interfaces by other forms of wireless transmission.

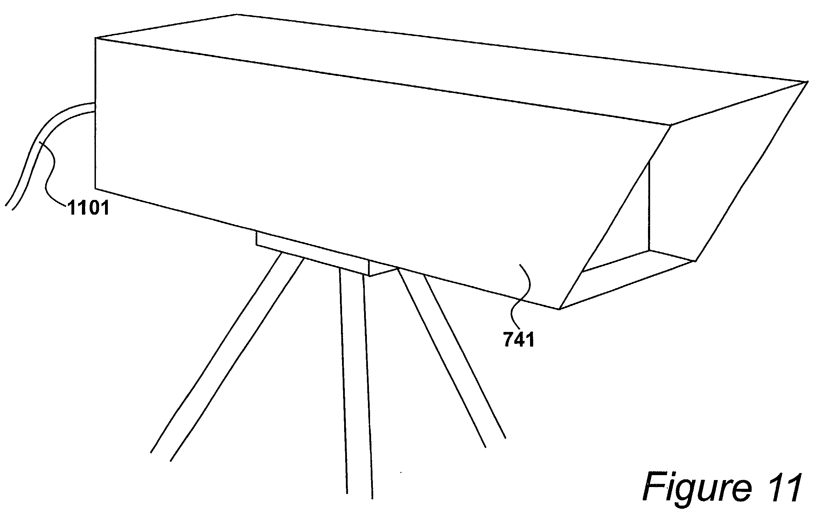

Camera **741** is illustrated in *Figure 11*. Infrared transmitter **747** is incorporated within the camera. Cable **1101** connects the instruments to central processor **742**. The cable supplies both power and input to the camera and the transmitter. Camera **741** is an ordinary CCTV camera comprising a lens and a digital array of light-responsive pixels. Typically, this may be a 1200 x 1200 array, although more accurate arrays are available. Transmitter **747** is a standard infrared transmitter.

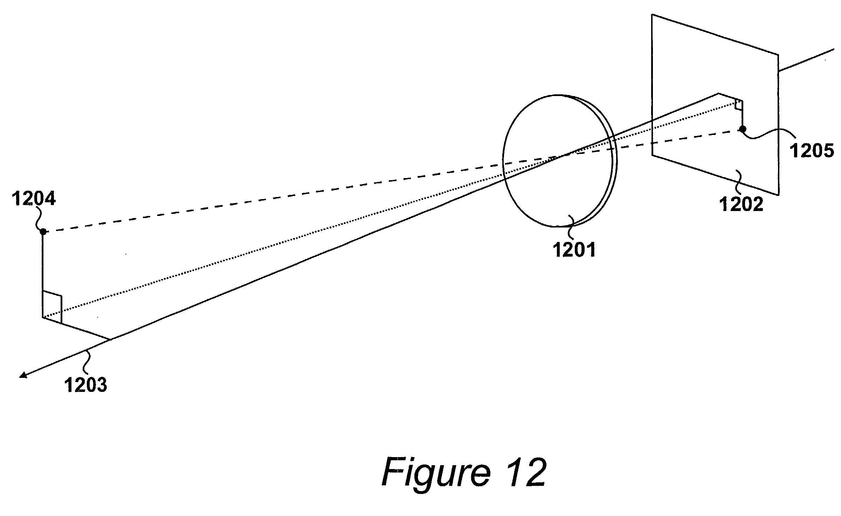

Although camera **741** may contain other components, for example a telephoto lens, it is only necessary to include a standard lens and an array. The principle behind the camera is shown in *Figure 12.* Lens **1201** is placed in front of array **1202** such that they are parallel and their centres of rotation both lie on optical axis **1203.** A light source **1204** emits light which passes through lens **1201** and is projected onto array **1202** at point **1205**. The co-ordinates of point **1205** on the array are known, as is the distance from the array to the centre of the lens, and so if the distance between lens **1201** and point **1204** is also known its co-ordinates in space relative to the optical axis **1203** may immediately be calculated.

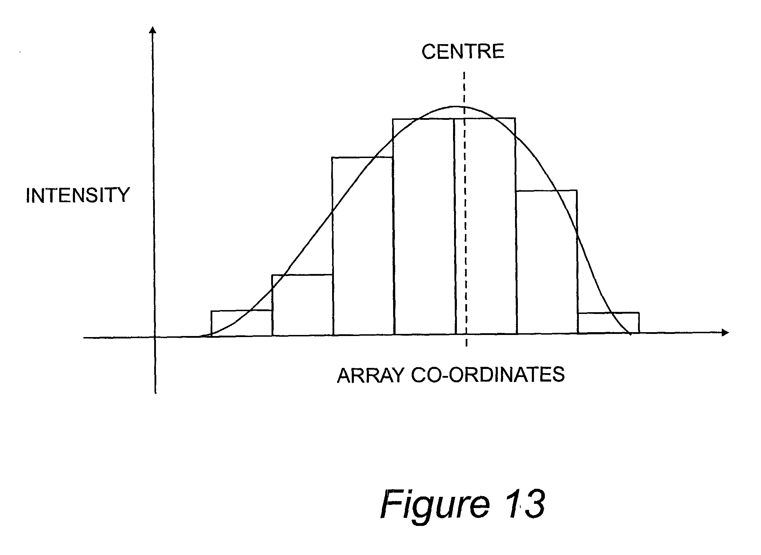

Obviously, standard CCTV cameras are not accurate enough to pinpoint precisely the location of the point of light, especially since individual LEDs vary highly in their shapes and outputs. However, two methods of calibration may be used in order to overcome these problems. Firstly, an LED projected onto the array will cause more than one pixel to be activated, but for accuracy of measurement a fraction of a pixel is used as the co-ordinates. *Figure 13* shows how a statistical analysis of the intensity of light falling on the array gives a centre pixel for each LED, and also gives a fraction of that pixel. In this way the low resolution of the array and the varying outputs of the LEDs are compensated for.

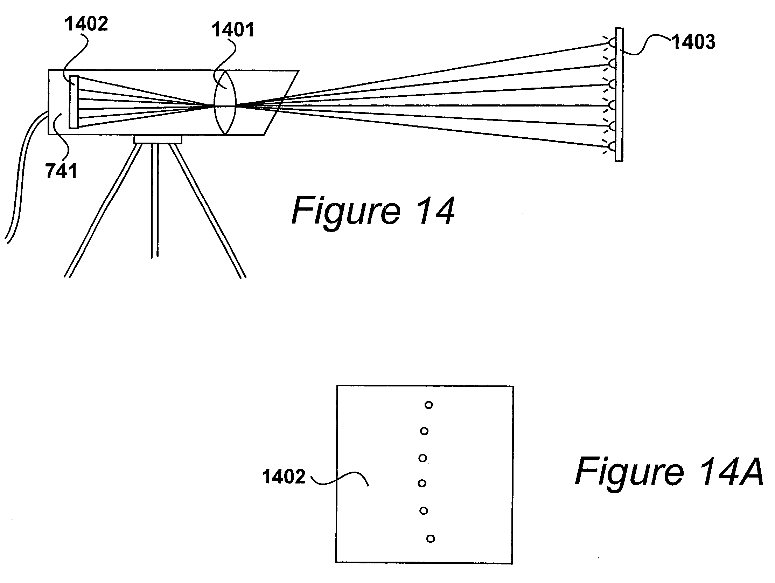

Secondly, imperfections in the lens may cause the position of an LED to be inaccurately represented on the array. *Figure 14* shows camera **741,** containing lens **1401** and array **1402.** A straight bar **1403** comprising a number of LEDs, in which the distances between the LEDs are known, is held at a known distance from the camera. It may then be calculated what the co-ordinates of the projections onto array **1402** should be. *Figure 14A* shows how distortions in the lens may cause the actual projections to be made onto different co-ordinates in the array. By repeatedly passing bar **1403** before the camera, it is possible to create a look-up table from which the correct co-ordinates in space from the point of view of the camera may be obtained given actual co-ordinates of a projection. These co-ordinates are given in terms of the row number and column number of the pixel fraction obtained by the above-described intensity analysis.

In addition to the above calibration, the LED arrangement on each light pad must be plotted and known. The LEDs can either be placed precisely upon the surface of the cube, or placed less accurately but precisely measured after placement. The pattern of LEDs that the camera sees when the light pad is in the correct position on the aircraft is stored as a set of co-ordinates.

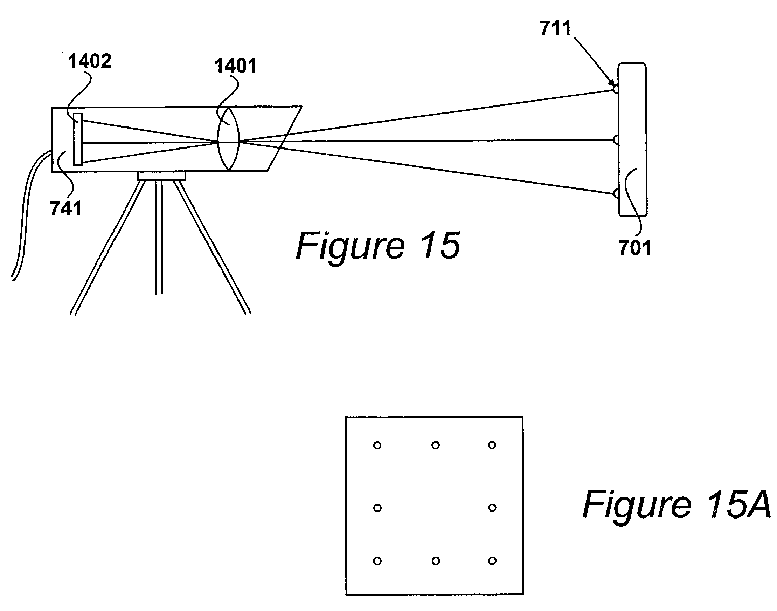

*Figure 15* again shows camera **741,** comprising lens **1401** and array **1402.** When light pad **701** is placed on the aircraft the images of the LEDs which make up LED arrangement **711** are projected onto array **1402,** the actual co-ordinates are obtained and the corrected co-ordinates are retrieved using the calibration look-up table. A plotting of the corrected co-ordinates is shown in *Figure 15A.* This plotting is not of the actual points seen on array **1402** but is an imaginary representation of the corrected co-ordinates.

These co-ordinates can be matched to the stored pattern of the light pad. The pattern is stored with a degree of tolerance such that if the respective component is out of alignment the pattern is still recognised. This is possible because the changes in alignment that this system detects are very small and so the pattern changes very little. The size of the recognised pattern gives the distance from the camera to the light pad, although only to an accuracy of 0.5mm.

It will now be clear that the square arrangement of LEDs is not the only one possible: in fact any arrangement in more than one dimension will suffice if it allows a number of LEDs to be seen such that the same pattern cannot result from two different positions of the light pad. Although in theory this may be achieved by only using three LEDs, if the bracket were in any way damaged this would not be apparent from only three LEDs. Using extra LEDs ensures that any damage of the light pad would produce a pattern inconsistent with any of those which it is possible to produce using an undamaged arrangement. In this way the present invention is self-checking, such that if a light pad is damaged and the pattern of LEDs changes, processor **742** will be unable to understand the input.

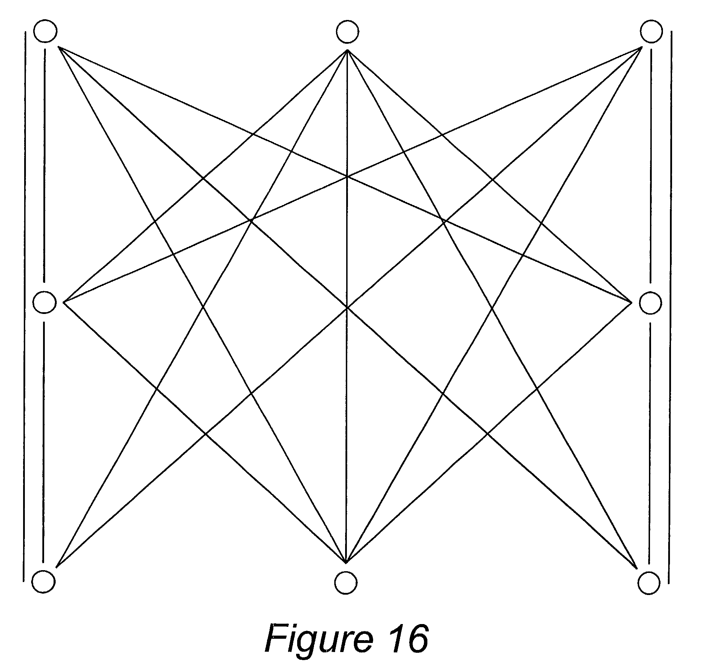

The particular merit of the arrangement given in this embodiment is that the square arrangement gives twenty-one measurements between pairs of LEDs in each of the two dimensions, as shown in *Figure 16.* Results obtained by each of these measurements may be averaged out to increase accuracy.

Although these calibration processes are time consuming, they need only be done once and can to a certain extent be automated. The final step is to place each bracket on a master tray that mimics precisely the tray inside the aircraft for which the bracket is intended. The exact difference between the attitude of the light pad and the tray can then be calculated and stored as a correction matrix with three rows and one column (3x1). When the orientation of the light pad with respect to the ARP light pad is found during use of the system it will also be given as a 3x1 matrix and so the sum of the two matrices minus the correction matrix for the ARP light pad will give the attitude of the tray.

The system is now ready for use. As described above with reference to *Figure 9,* the program run by controlling processor **742** is loaded to disk from CD-ROM **906.** Also included on CD-ROM **906** is a certain amount of information which is stored on disk **903**. Firstly, display screens containing set-up instructions are stored. These display screens differ depending upon the type of aircraft or vessel being aligned. Although the program instructions remain identical for each application, the set-up instructions vary with the number and type of components, and so a number of display screens are stored on disk and retrieved when necessary.

In addition, the calibration lookup table, the pattern-matching table and the correction matrices are stored on disk **903**.

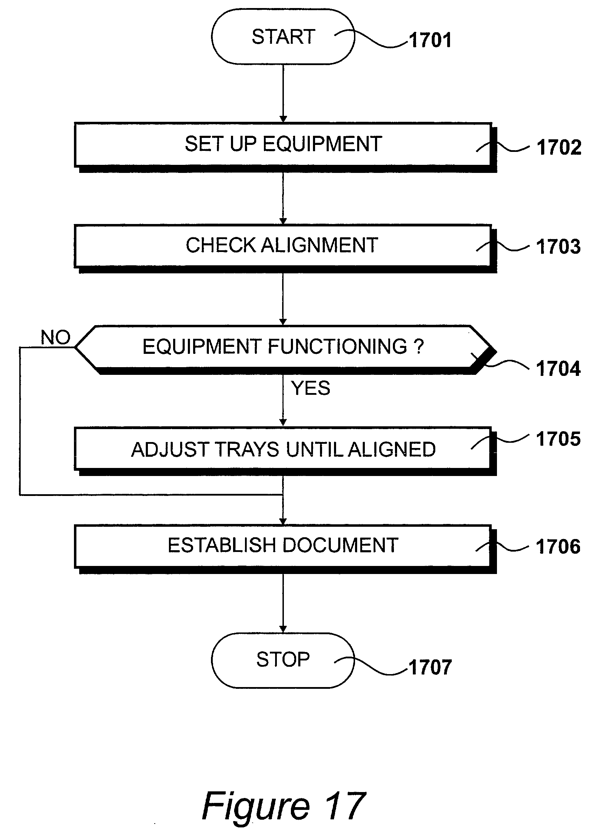

When required, the program instructions may be loaded into memory **902** from disk **903** and run. *Figure 17* shows this program. At step **1701** the program is initiated by the user and at step **1702** instructions stored on disk **903** for setting up the equipment are displayed.

At step **1703** the alignment of each component is checked and at step **1704** a question is asked as to whether there were any errors, indicating equipment failure. If this question is answered in the affirmative then control is directed to step **1706** at which documentation to this effect is established and the process then ends. This is an advantage over prior alignment systems which have no self-checking mechanisms. If the damage to the equipment can be corrected the program may then be restarted; alternatively the equipment can be recalibrated.

If the question asked at step **1704** is answered in the negative then at step **1705** any necessary realignment is carried out. At step **1706** documentation detailing the measurements and adjustments made during the process is established and at step **1708** the program terminates.

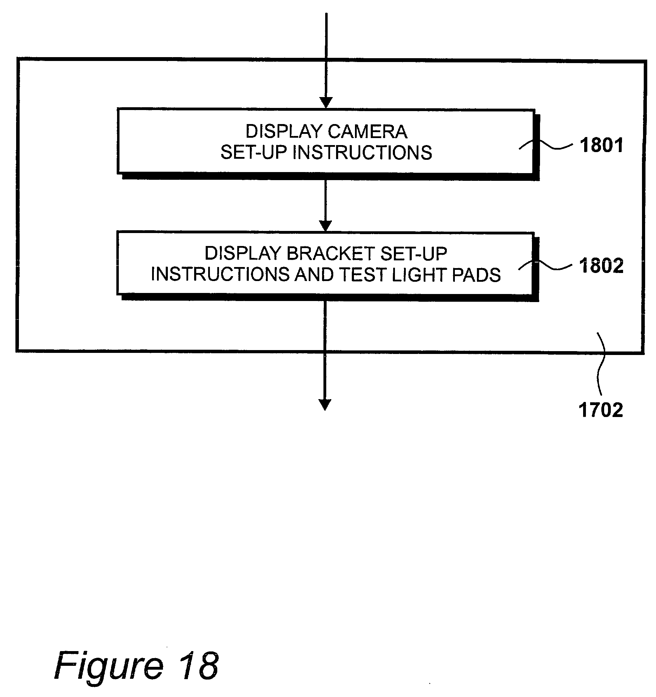

*Figure 18* details step **1702** at which the equipment is set up. At step **1801** instructions for setting up the camera are displayed and at step **1802** instructions for setting up the brackets are displayed and the brackets are tested.

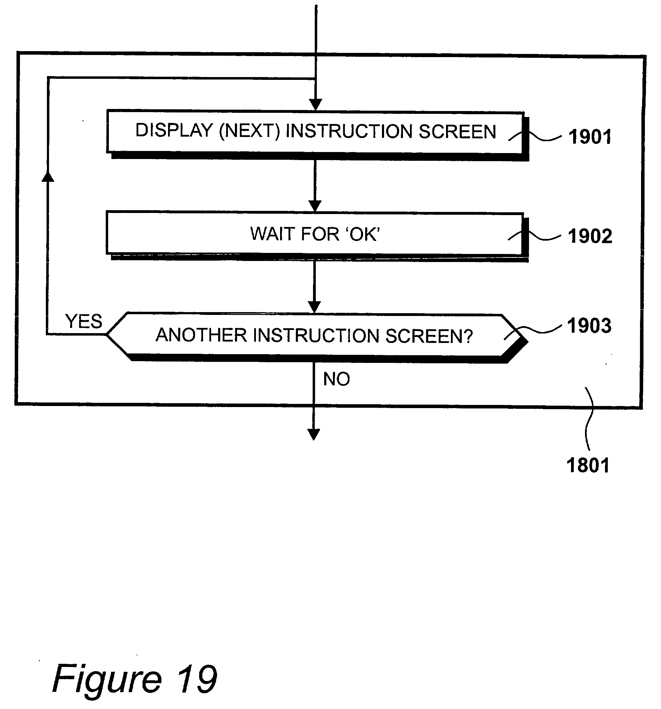

*Figure 19* details step **1801** at which the instructions to set up the camera are displayed. These are retrieved from hard disk **903.** At step **1901** the first instruction screen is displayed and at step **1902** the program waits for the input 'OK'. At step **1903** a question is asked as to whether there is another instruction screen. If this question is answered in the affirmative then control is returned to step **1901** and the next screen is displayed. If it is answered in the negative then step **1801** is concluded.

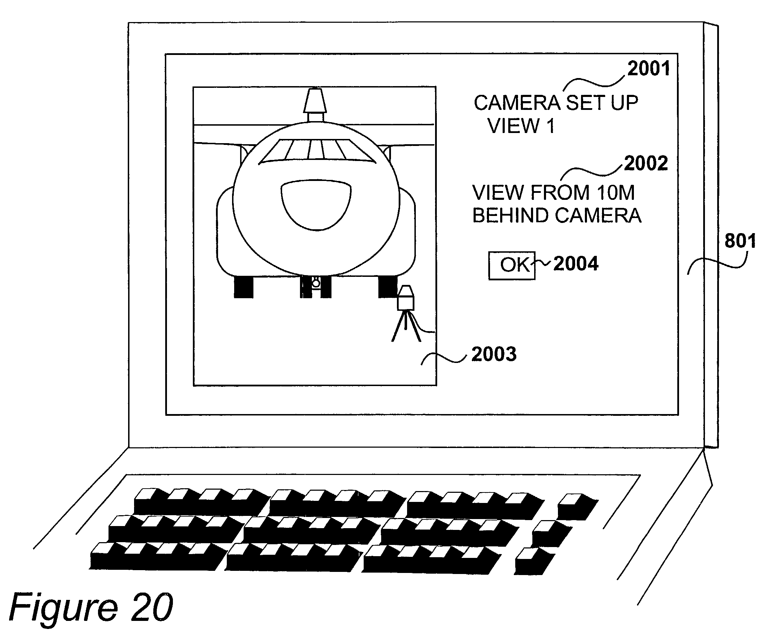

The instruction screens depend upon the type of aircraft or vessel being aligned, and may conceivably take many forms. An exemplary instruction screen is shown in *Figure 20* in which laptop computer **801** displays a combination of text and diagrams. The text at line **2001** gives the title of the screen, in this case 'Camera Set-up View 1'. Text **2002** gives an explanation of picture **2003** and button **2004** is used to send an 'OK' input to the processor. Typically, three screens, one displaying the view from behind the camera and one displaying the view from each side, would be enough to ensure that the camera is positioned correctly. The camera does not need to be precisely placed in a certain position, but it is necessary that it is in such a position that when the brackets are affixed to the trays, all the light pads can be seen.

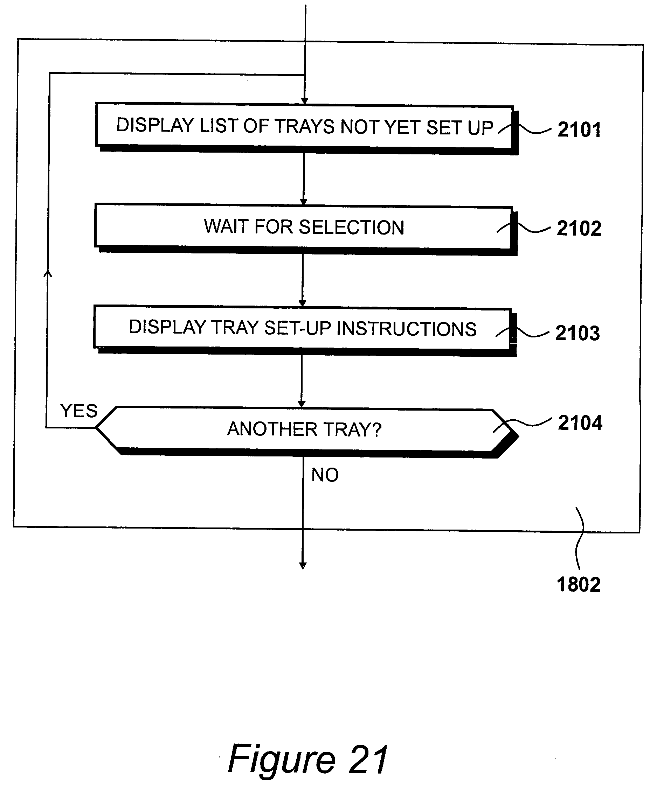

*Figure 21* details step **1802** at which the brackets are set up and tested. At step **2101** the list of component trays is displayed and at step **2102** the program waits for a selection by the user.

At step **2103** the instructions for opening the inspection hatch, removing the avionic component and affixing the relevant bracket are displayed.

At step **2104** a question is asked as to whether there is another tray to set up. If this question is answered in the affirmative then control is returned to step **2101** and the list of the remaining trays is displayed. If it is answered in the negative then all trays have been set up and step **1802** is completed.

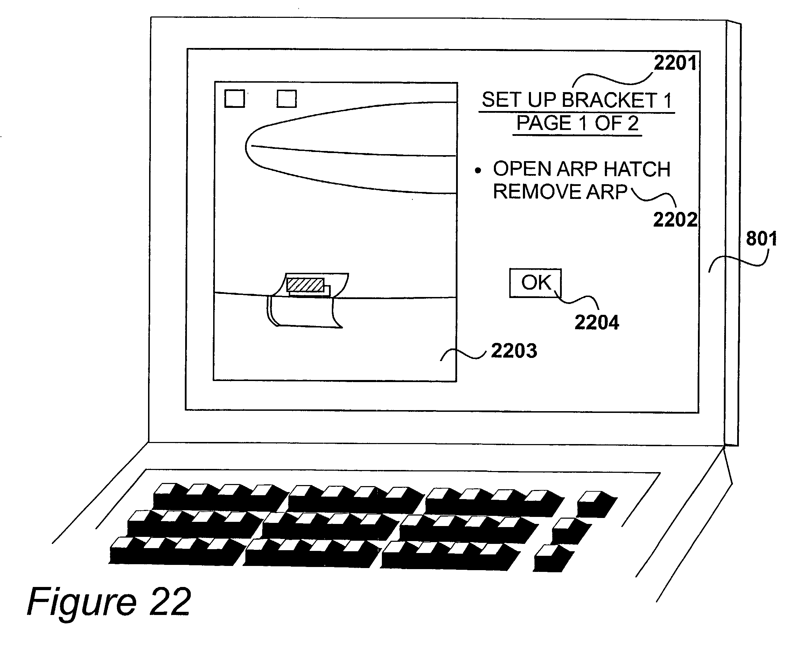

*Figure 22* shows an exemplary instruction screen displayed at step **2101** on laptop computer **801** for setting up a bracket. As in *Figure 20,* text **2202** gives the title of the screen, text **2202** gives textual instructions and picture **2203** gives visual instructions. Button **2204** sends an 'OK' input to the processor. The displaying of these screens at step **2103** is carried out in precisely the same manner as at step **1801** detailed in *Figure 19*.

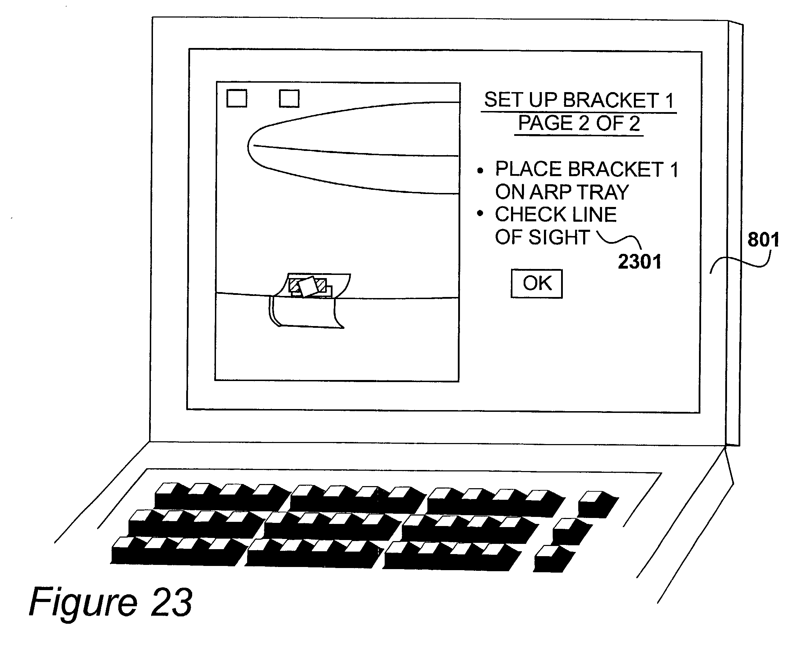

*Figure 23* shows another instruction screen displayed on laptop computer **801,** the follow up page to that displayed in *Figure 22.* It is similar to *Figure 22,* but contains, in addition to the remaining set up instructions, the instruction at line **2301** to check the line of sight from the LEDs to the camera before pressing the 'OK' button. In this way all the brackets are set up before the alignment check is performed.

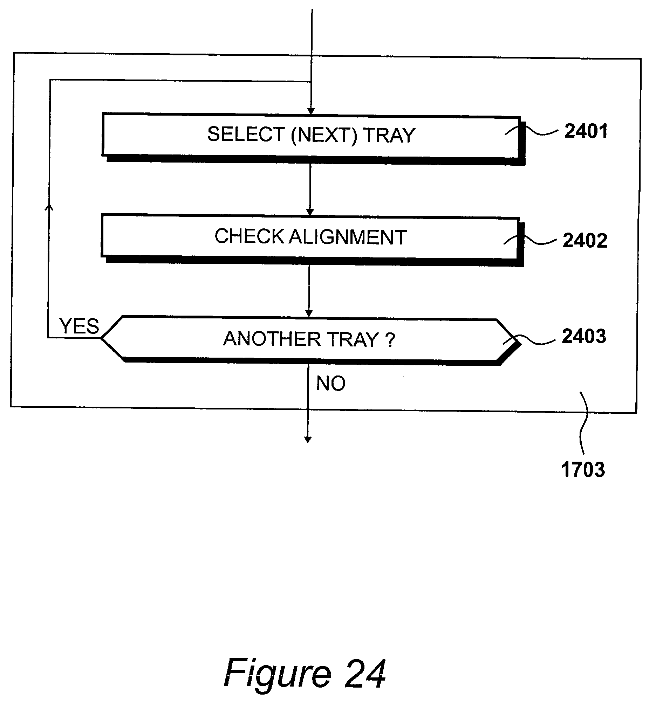

*Figure 24* details step **1703** at which the alignment of each component tray is checked. At step **2401** a tray is selected that is not the ARP tray. The ARP is a reference point and every other component is aligned to it. They are not aligned to the actual aircraft or to any external object so there is no need to check the alignment of the ARP tray. On many aircraft it is in fact not adjustable. On some aircraft all trays are adjustable, and in other aircraft none of the trays is adjustable but if the relative alignments of the trays are known then an on-board computer can compensate accordingly. Hence in other embodiments (not shown) it is possible to use any of the trays as the reference point.

At step **2402** the alignment of the selected tray is checked and the necessary adjustments are displayed. At step **2403** a question is asked as to whether there is another tray to check. If this question is answered in the affirmative then control is returned to step **2401** and the next tray is selected. If it is answered in the negative then all trays have been checked and step **1703** is complete.

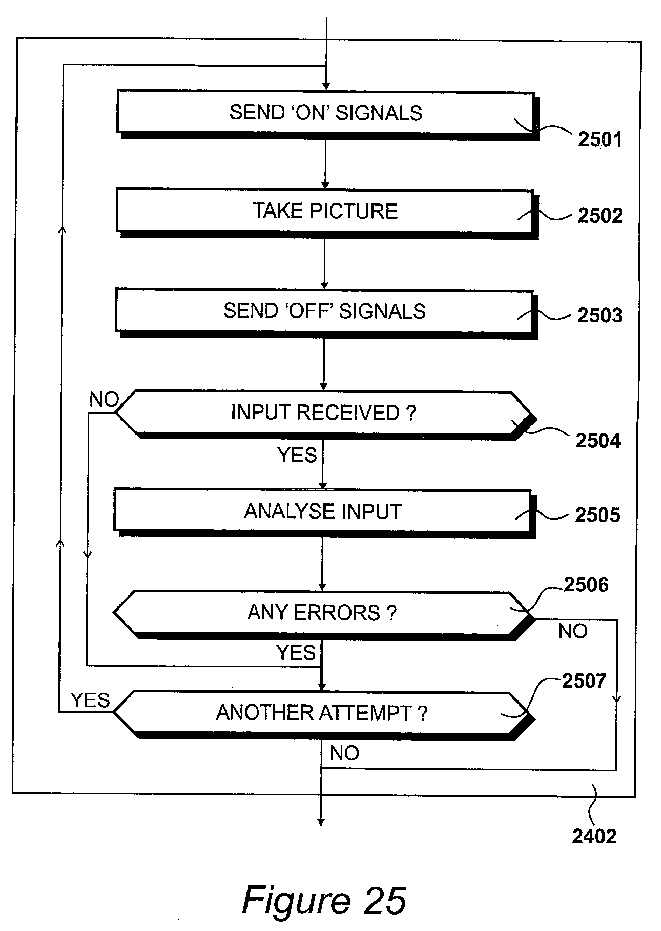

*Figure 25* details step **2402** at which the alignment of a tray is checked. At step **2501** an 'ON' signal is sent to the processors in the light pad interfaces connected to the ARP tray and to the selected tray. As previously discussed, in this embodiment the signals are sent via infrared transmitter **741** but in other embodiments they could be sent via cable connections. These signals cause the processors in the interfaces to turn on the LEDs in the relevant light pads.

At step **2502** camera **747** is instructed to take a picture and at step **2503** 'OFF' signals are sent to the relevant interfaces. Hence input should be received from camera **747** consisting of a digital image of the LEDs. At step **2504** a question is asked as to whether this input has been received. If this question is answered in the negative then control is directed to step **2507** at which the question is asked as to whether another attempt should be made. This decision can be made either by the operator or by the existence of a pre-set number of attempts. It may also depend upon the nature of the test failure. For example, if no input was received then the simplest explanations include the line of sight being obscured by an operator or the battery in an interface requiring changing. However, it is also possible that either the light pad or the camera is damaged and not functioning. Hence, another attempt may solve the problem, but more than a certain number of attempts would not be useful.

However, if input has been received then at step **2505** it is analysed and at step **2506** the question is asked as to whether there were any errors in the analysis. Damage to the light pad, for instance from being dropped or mishandled, will result in errors, either because the pattern of LEDs will not be recognised or because accurate three-dimensional co-ordinates cannot be obtained. Hence if this question is answered in the affirmative then at step **2507** the question is asked as to whether another attempt should be made. If this question is answered in the affirmative then control is returned to step **2501** and the procedure is repeated. If it is answered in the negative then step **2402** is concluded and the question asked at step **1704** as to whether the equipment is functioning will be answered in the negative, resulting in termination of the process.

If a single light pad is damaged then the system cannot be used. As previously described, the present invention differs from other alignment systems in that non-functioning of the equipment can be detected. In previous systems damage could go unnoticed and thus components could be aligned incorrectly.

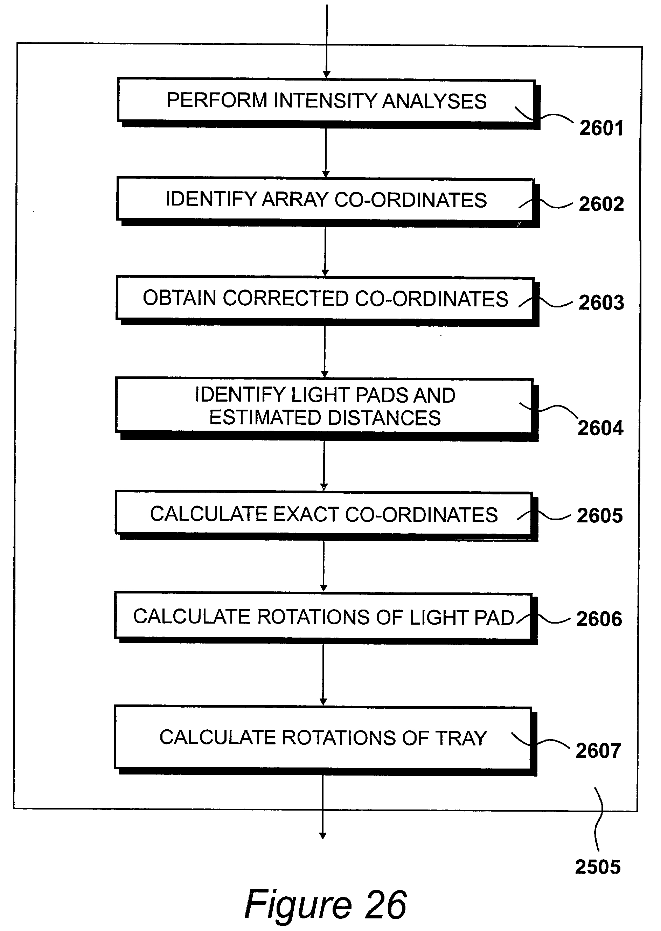

*Figure 26* details step **2505** at which the input from camera **747** is analysed. At step **2601** an intensity analysis is performed. The input from camera **741** takes the form of a number of array co-ordinates together with an intensity for each one. As shown in *Figure 13* a statistical analysis of the intensity of neighbouring co-ordinates can be used in order to pinpoint the centre co-ordinate of the LED's projection of light.

At step **2602** the analysis performed at step **2601** is used to identify one set of two-dimensional co-ordinates, in terms of fractions of pixels, for each point of light seen. At step **2603** corrected co-ordinates are obtained from the calibration look-up table. These are the exact y-axis and z-axis co-ordinates that are used in the final calculations.

At step **2604** these co-ordinates are pattern-matched. Ideally, eight LEDs should be seen for each light pad but the pattern-matching may be possible if fewer are seen. The system can, in theory, function with only three co-ordinates but this does not allow a sufficient degree of redundancy and error-checking. Hence if not enough LEDs are seen this will result in an error.

The pattern-matching identifies the two light pads seen and the approximate distance from each LED to the camera (with accuracy of 0.5mm). This gives co-ordinates on the x-axis and so now there are three-dimensional co-ordinates for each LED. These co-ordinates are relative to the camera but if the camera is moved it does not matter because the co-ordinates of both light pads will change. The process calculates the difference in orientation between the two pads and so the position of the camera is not relevant.

At step **2605** the known distances between the LEDs are used to calculate the exact distances along the x-axis between each of the LEDs.

At step **2606** matrix transformations are performed which calculate the difference in rotation between the two light pads as a matrix and at step **2607** the matrix so obtained is added to the stored correction matrix for the selected tray, and the correction matrix for the ARP tray is subtracted to give the difference in rotations between the two trays.

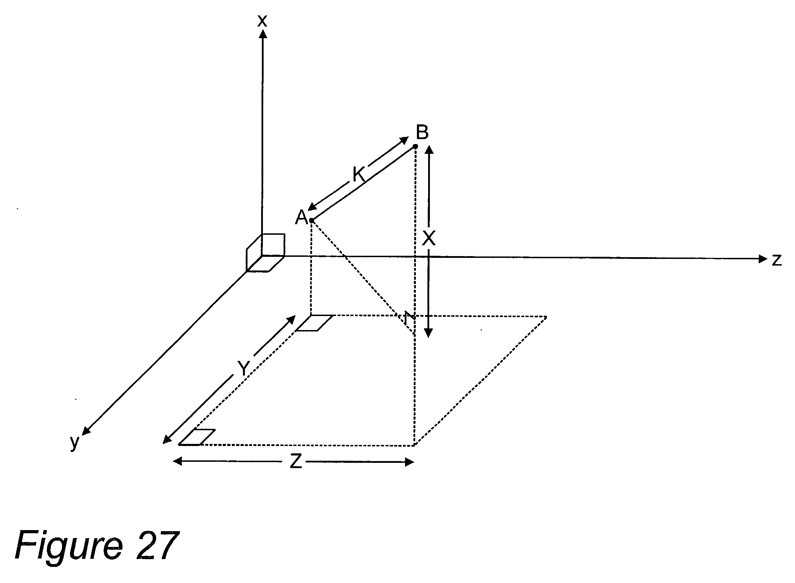

*Figure 27* illustrates how the exact x-axis measurements are obtained. Traditional photogrammetric systems tend to use two cameras when depth accuracy is necessary since one camera can only pinpoint the distance from the camera to the LED within about 0.5 millimetres. Using two cameras is a lengthy process because the distance between them and their relative angles must be known to extreme accuracy. This is achieved by using a known arrangement of LEDs to 'calibrate the space'. This involves placing the arrangement in at least sixteen different known positions. Hence, since one aim of this system is to reduce the length of time it takes to align the components, two cameras cannot be used.

However, depth accuracy of 0.5 millimetres is not sufficient to give accuracy of three milliradians in measuring the angles. The present invention improves the use of one camera to give the required accuracy by involving the known distances between the LEDs on the light pad.

As shown in *Figure 27,* given two points in space A and B there are distances between them along each of the three axes. In this case, distance Y along the y-axis and distance Z along the z-axis are known. If the actual measured distance between the two points is also known, K, the distance X along the x-axis can be calculated. This principle is followed for the pairs of LEDs in the light pad. The distances between them along the y-axis and the z-axis are known accurately and the actual distances between them are also known accurately. Hence accurate distances between them along the x-axis can be found. There are twenty-one possible measurements in each of the y and z dimensions between the LEDs, and so making a lot of measurements and averaging out results gives more accurate x-axis co-ordinates. These must all be based on a first x-axis co-ordinate of one of the LEDs so they are not completely accurate in terms of distance from the camera but the displacement between the LEDs is mapped exactly. Since it is rotational accuracy that is necessary rather than positional, this is sufficient. Hence, the limited depth accuracy of one camera combined with the accurate measurement before use of the LEDs on the light pad produce rotational measurement accuracy of the order required by delicate equipment such as radar.

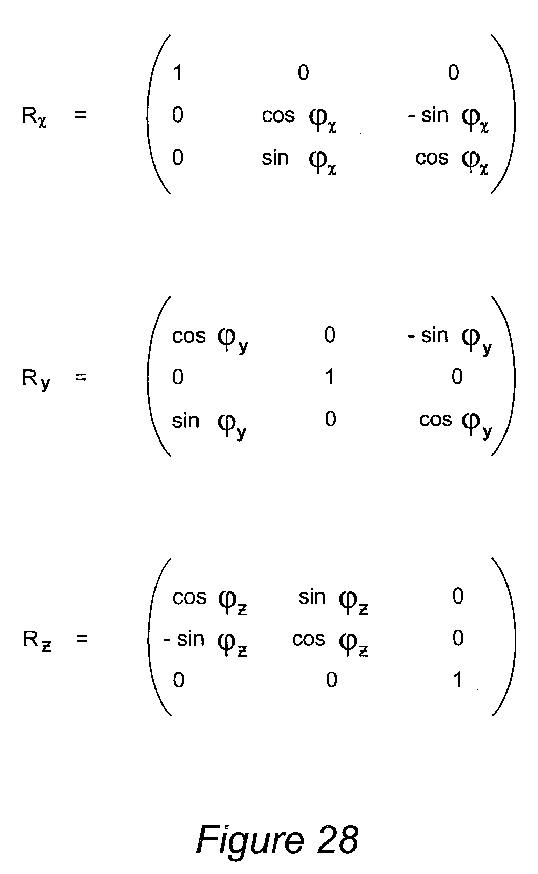

*Figure 28* shows the matrices used to calculate the differences in rotations between the ARP light pad and the selected light pad. The co-ordinates of the LEDs in the selected light pad are placed in a matrix with 3 columns and 8 rows (a 3 x 8 matrix) P, and the co-ordinates of the LEDs in the ARP light pad are placed in a 3 x 8 matrix Q. Using iterative methods to solve the equation P = Q Rₓ, where Rₓ is as given in Figure 28, gives ϕₓ, the rotation about the x-axis, where positive values of ϕₓ are measured counterclockwise. Similarly, solving P = Q R_{y} and P = Q R_{z} gives the rotations about the y-axis and the z-axis. The rotations are found simultaneously by solving P = Q Rₓ R_{y} R_{z} for all three rotations.

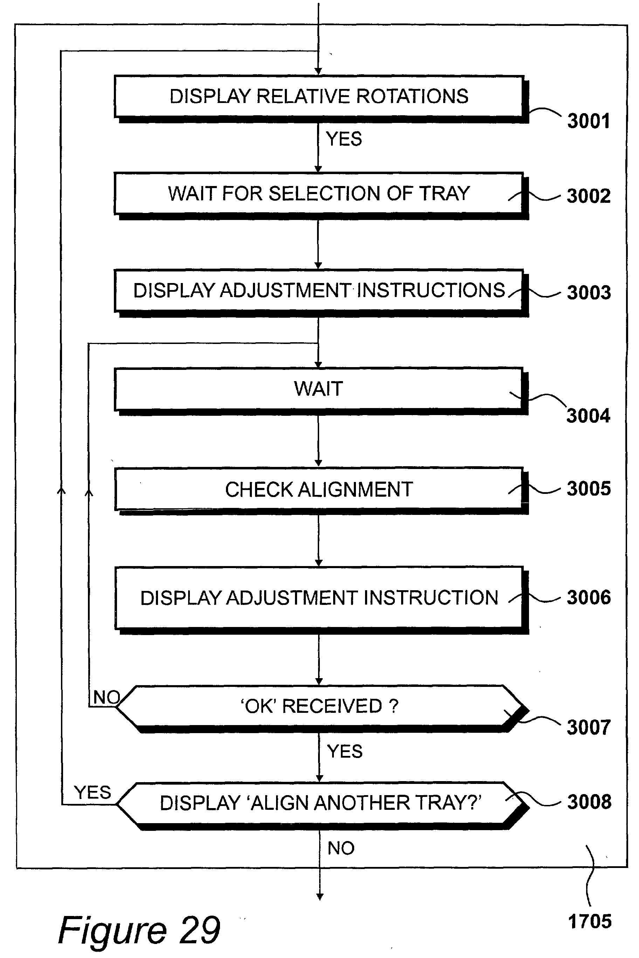

*Figure 29* details step **1705** at which the trays are aligned. The rotations of the trays relative to the ARP tray are displayed at step **2901** and at step **2902** a the program awaits selection of a tray by the user. At step **2903** the program displays adjustment instructions allowing the user to align the tray with the reference tray and at step **2904** the process waits for a length of time, which in this embodiment is two seconds.

At step **2905** the alignment of the tray is checked in exactly the same way as at step **2505** detailed in *Figure 26* and at step **2906** the adjustment instructions are redisplayed. They will be different if any adjustment was made between the previous alignment check and the one carried out at step **2903**. At step **2907** a question is asked as to whether an 'OK' input has been received from the user and if this question is answered in the negative control is returned to step **2904** and the process waits again. If it is answered in the affirmative then at step **2908** the question 'ALIGN ANOTHER TRAY?' is displayed. If this question is answered in the affirmative by the user then control is then returned to step **2901** and the relative rotations of the trays are redisplayed for selection by the user. If it is answered in the affirmative then the user is happy with the alignment and step **1705** is complete.

This system allows the alignment of the selected tray to be continually monitored as adjustments are made. When the alignment is within tolerance the user stops the process and starts on another tray. At any time he may return to a previous tray until he is satisfied that all the trays are within tolerance. In alternative embodiments (not shown) trays may be automatically selected for adjustment by the system and automatically de-selected when within tolerance.

The major advantage of this system is that if a technician needs to climb on the aircraft to adjust a tray, as is often necessary, the aircraft may change position and so the light pads will move slightly. However, because the rotation of each tray is measured with respect to the ARP tray rather than with respect to some external object this problem, so hard to solve in previous systems, becomes irrelevant. Both light pads move and their relative rotations stay the same.

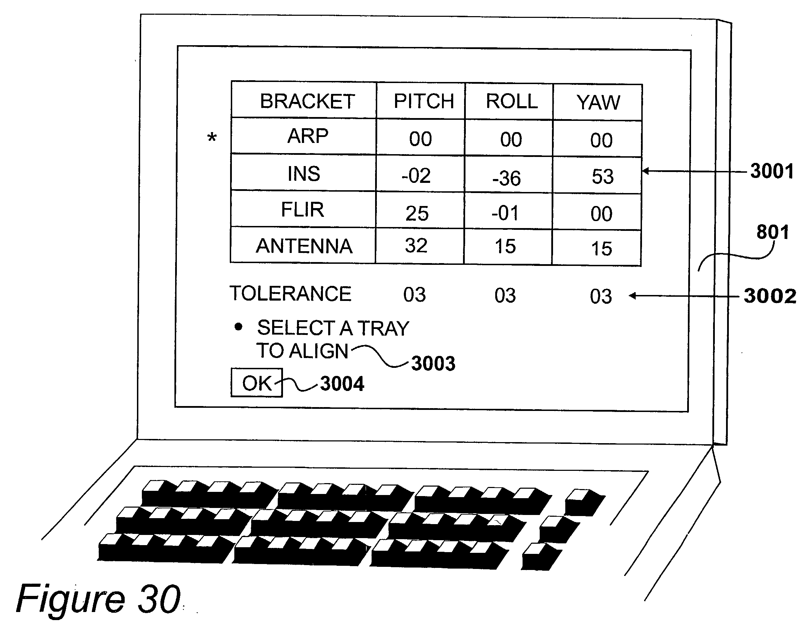

*Figure 30* illustrates the display of the list of trays on laptop computer **801.** Table **3001** shows the angles of rotation of each of the trays relative to the ARP tray, which is shown marked with an asterisk indicating that it is the reference tray. Its angles of rotation are all zero because they are calculated with respect to itself. All angles are measured in milliradians and positive or negative values indicate whether the rotation is counterclockwise or clockwise respectively about the axis.

Text **3002** shows that the tolerance for this aircraft is plus or minus three milliradians, and text **3003** invites the user to select a tray to align. Button **3004** confirms the selection.

*Figure 31* illustrates the display of necessary adjustments on laptop computer **801,** the tray selected being the INS tray as shown in text **3101.** Table **3102** contains the angles of rotation at row **3103**, the relevant adjusting screw at row **3104** and the amount by which it should be moved at row **3105**. Diagrams **3107** and **3108** illustrate the positions of the adjusting screws.

When all the angles of rotation on all of the trays are within tolerance then the alignment is complete, and it simply remains to establish documentation at step **1706** before the process terminates at step **1707**.

## Claims

1. Apparatus for identifying the position of an object, comprising
a bracket of known size configured to be precisely fixed to an object, wherein said bracket has a plurality of substantially point-sized light sources or reflectors affixed thereto in a known arrangement;
one or more opto-electronic sensing means configured to sense the positions of said light sources or reflectors in two dimensions relative to the optical axes of said sensing means; and
data processing means configured to receive said relative positions of said light sources or reflectors from said sensing means, and to identify the position of said object by referring to the predetermined arrangement of said light sources or reflectors.

2. Apparatus according to claim **1**, wherein said bracket comprises a fixing interface, a connecting means and a light pad.

3. Apparatus according to claim **2**, wherein said fixing interface attaches to said object.

4. Apparatus according to either of claims **2** or **3**, wherein said connecting interface comprises a number of rods.

5. Apparatus according to claim **4**, wherein said rods are made of titanium.

6. Apparatus according to any of claims **2** to **5**, wherein said light pad comprises a shaped block with said point-sized light sources or reflectors affixed thereto.

7. Apparatus according to claim **6**, wherein said shaped block is a cube.

8. Apparatus according to any of claims **1** to **7,** wherein said arrangement of light sources or reflectors comprises at least three light sources or reflectors.

9. Apparatus according to any of claims **1** to **8,** wherein said light sources or reflectors are arranged in a two-dimensional arrangement.

10. Apparatus according to any of claims **1** to **9,** wherein said arrangement comprises eight light sources or reflectors arranged in a square.

11. Apparatus according to any of claims **1** to **10,** wherein said object is a component of a radar system.

12. Apparatus according to claim **11**, wherein said radar component is carried on an aircraft.

13. Apparatus according to either of claims **11** or **12**, wherein said radar component includes a line-replaceable unit and a tray.

14. Apparatus according to claim **13**, wherein said fixing interface of said bracket attaches to said tray when said line-replaceable unit is removed.

15. Apparatus according to any of claims **1** to **14,** wherein said opto-electronic sensing means each include a spherical lens and a two-dimensional array of photosensitive elements.

16. Apparatus according to claim **15**, wherein each of said sensing means is calibrated by the method of passing a known arrangement of substantially point-sized light sources or reflectors at known distances from said sensing means.

17. Apparatus according to any of claims **1** to **16,** wherein said data processing means includes means for performing a statistical analysis of the intensity values registered by a number of neighbouring photosensitive elements in order to increase the accuracy of the measurements of said relative positions of said light sources or reflectors to fractions of a photosensitive element.

18. Apparatus according to any of claims **1** to **17,** wherein said bracket contains a power source for said light sources.

19. Apparatus according to any of claims **1** to **17,** wherein said data processing means powers said light sources by means of one or more cables between said data processing means and said bracket.

20. Apparatus according to any of claims **1** to **19,** wherein said light sources are controlled by infrared signals from said data processing means.

21. Apparatus according to any of claims **1** to **19,** wherein said data processing means controls said light sources by means of one or more cables between said data processing means and said bracket.

22. Apparatus according to any of claims **1** to **21**, wherein said point-sized light sources are LEDs.

23. A method of identifying the position of an object, **characterised by** the steps of
precisely fixing a bracket of determined size to an object, wherein said bracket has a plurality of substantially point-sized light sources or reflectors affixed thereto in a predetermined arrangement;
sensing the position of said light sources or reflectors by sensing means in two-dimensions relative to the optical axes of said sensing means;
processing position data received from said sensing means identifying relative positions of said light sources or reflectors; and
identifying the position of said object by referring to the predetermined arrangement of said light sources or reflectors.

24. A method according to claim **23**, wherein said object is a component of a radar system including a line-replaceable unit and a tray wherein said bracket is precisely fixed to said tray after said line-replaceable unit has been removed.

25. A method according to claim **23** or claim **24**, wherein said sensing means is calibrated by passing a known arrangement of substantially point-sized light sources or reflectors passed said sensing means at known distances from said sensing means.

26. A method according to any of claims **23** to **25**, wherein a statistical analysis of the intensity values registered by a number of photo-sensitive elements is performed in order to increase the accuracy of the measurements of said relative positions of said light sources or reflectors to fractions of a photo-sensitive element.
